Europäisches Patentamt

European Patent Office

Office européen des brevets

(11) Publication number: **0 514 607 A1**

## (12) EUROPEAN PATENT APPLICATION

(21) Application number: **91311277.7**

(22) Date of filing: **04.12.91**

(51) Int. Cl.5: **G11B 33/08**, G11B 17/02

(30) Priority: **24.05.91 JP 120480/91**

(43) Date of publication of application:
**25.11.92 Bulletin 92/48**

(84) Designated Contracting States:
**DE FR GB**

(71) Applicant: **PIONEER ELECTRONIC CORPORATION**
**No. 4-1, Meguro 1-chome**
**Meguro-ku Tokyo 153(JP)**

(72) Inventor: **Sawada, Katsumi, c/o Pioneer Electronic Corp.**
**Tokorozawa Works, 2610, Hanazono 4-chome**
**Tokorozawa-shi, Saitama(JP)**
Inventor: **Sato, Shogo, c/o Pioneer Electronic Corp.**
**Tokorozawa Works, 2610, Hanazono 4-chome**
**Tokorozawa-shi, Saitama(JP)**

(74) Representative: **Jackson, Peter Arthur**
**Gill Jennings & Every, 53-64 Chancery Lane**
**London WC2A 1HN(GB)**

(54) **Auto-loading disk player.**

(57) An auto-loading disk player includes a pressure member which is brought into contact with a disk to be played thereby to press the disk. The pressure member is supported by and within a player housing by means of first vibration absorbing members (27). A movable carrying member is provided so as to be ejected from and inserted into the player housing through an opening formed in the player housing. The disk player further includes a drive mechanism for driving the carrying member to move the same, a turntable being mounted on the carrying member by means of a second vibration absorbing member (19), and carrying the disk thereon, the turntable cooperating with the pressure member to nip or clamp the disk and to rotate the disk. Further, a mechanism is provided for making the pressure member and the turntable approach each other and to separate them one from the other. The disk player further includes a fastening means (12) which fastens the turntable to the carrying member and releases the turntable from its fastened state in synchronism with the ejecting operation and the inserting operation of the carrying member. With such a construction, there is no need of using a plurality of resilient members for mounting the turntable to the carrying member. In other words, use of a single resilient member suffices for mounting the turntable to the carrying member.

FIG. 2

The present invention relates to an auto-loading disk player with a movable carrying member capable of carrying a data record disk (referred to simply as a disk), in which the movable carrying member may be ejected from a player housing and inserted into the player housing, through an opening of the player housing, whereby the disk is automatically transferred to a playing position and returned from the playing position to a disk set/remove position.

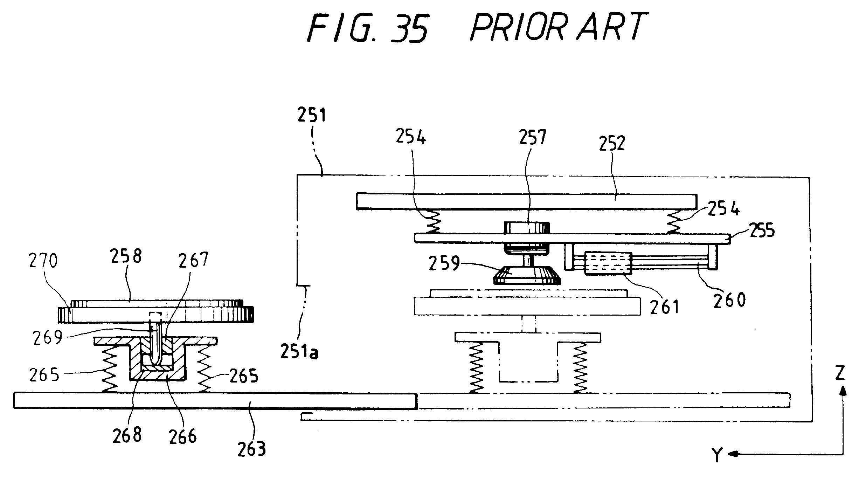

The internal structure of a conventional auto-loading disk player of this type is shown in Fig. 35. As shown, a movable base 252 is installed in a player housing 251, which is movable vertically (in the direction of an arrow "Z" and in the opposite direction). The movable base 252 is vertically moved by a base drive means, not shown. A mechanical chassis 255 is mounted on the movable base 252 by means of first vibration absorbing means in the form of resilient members, such as coil springs or floatable rubber pieces. A motor 257 is mounted to the mechanical chassis 255. The output shaft of the motor 257 is coupled with a disc-like press member 259, which comes in contact with the disk 258 and presses the disc. A linear motor 260 is further mounted to the mechanical chassis 255. An optical pickup 261 is moved along the record surface of the disk by means of the linear motor 260.

A movable carrying member 263 is provided. The movable carrying member 263 is movable back and forth (in the direction of an arrow Y and in the opposite direction). The movable carrying member 263 is ejected from and inserted into the player housing 251 through an opening 251a, formed in the front panel of the player housing 251. A carrying member drive means (not shown) is provided for moving the movable carrying member 263. A bearing holder 266 is mounted on the movable carrying member 263 by means of second vibration absorbing means in the form of resilient members 265, such as a plurality of coiled springs or floatable rubber pieces. A spindle 269 is rotatably supported by the bearing holder with the aid of a radial bearing 267 and a thrust bearing 268. A turntable 270 is fastened to the top end of the spindle 269. The turntable 270 supports the disk 258, and cooperates with the pressure member 259 to nip the disk so as to rotate the disk. The pressure member 259 approaches and is moved away from the turntable 270 when the movable base 252 is vertically moved by a base drive means (not shown).

In the auto-loading disk player thus constructed, the turntable 270 is mounted on the movable carrying member 263 for transporting it by means of the resilient members 265. The pressure member 259 is also supported by the movable base 252, and hence the player housing 251, through resilient members 254. In a play mode, the combination of the turntable 270, the pressure member 259, and the disk 258 floats from the player housing 251, through the vibration absorbing means. In the floating state, the combination is perfectly insulated from external vibrations. Accordingly, even if during the musical performance, an operator taps his fingers on the player housing 251 or touches the movable carrying member 263 with his hand, the resulting vibrations are absorbed by the first and second vibration absorbing means. The interruption of sound and the howling back owing to the transferred vibrations will not occur.

As described above, the plurality of resilient members 254 and 265 are respectively used for the first and second vibration absorbing means. The reason for this is as follows.

When the turntable 270 is placed outside the player housing, that is, at the position to place the disk 258 on the turntable, the turntable must be supported relatively rigidly (to such an extent that the turntable will not be unsteady). To realize this, the turntable is aerially supported using the plurality of resilient members 265.

With regard to the pressure member 259, it must support relatively heavy components, such as the motor 257 for driving the pressure member, per se and the optical pickup 261, in addition to the pressure member 259 itself. To reinforce the support, the plurality of the resilient members 254 are used to aerially support the components.

In the construction where the turntable 270 and the pressure member 259 are each aerially supported by the plurality of resilient members, the disk 258 is also aerially nipped between the turntable and the pressure member. The turntable and the pressure member each have respective centers. Accordingly, when the centers are not aligned with each other, the surfaces of the turntable and the pressure member will contact with each other nonuniformly. The rotor shaft of the disk, when rotated, will thus rotate eccentrically.

One of the possible approaches to solve the above problem would be to support the component rotating to follow, that is, the turntable 270, at one point. However, this approach still involves another problem in that when the turntable 270 is ejected from the player housing, it is unstable.

The present invention has been made in view of the above circumstances and has an object to provide an auto-loading disk player which is free from the eccentric rotation of the rotor shaft of the disk, and can satisfactorily, rigidly support the turntable when the turntable is placed at a disk set/remove position outside the player housing.

According to the invention, an auto-loading disk player includes a pressure member which is brought into contact with a disk to be played thereby to press the disk. The pressure member is supported by and within a player housing by means of first vibration absorbing means. A movable carrying member is provided so as to be ejected from and inserted into the player housing through an opening formed in the player housing. The disk player further includes drive means for driving the carrying member to move the same, a turntable being mounted on the carrying member by means of second vibration absorbing means, and carrying the disk thereon, the turntable cooperating with the pressure member to nip or clamp the disk and to rotate the disk. Further, means is provided for making the pressure member and the turntable approach each other and to separate them one from the other. The disk player further includes a fastening means which fastens the turntable to the carrying member and releases the turntable from its fastened state in synchronism with the ejecting operation and the inserting operation of the carrying member.

In the auto-loading disk player thus constructed, when the turntable is placed at the disk set/remove position outside the player housing, the turntable is fastened to the movable carrying member by means of the fastening means. When the turntable has been inserted into and set within the player housing, it is released from its fastened state.

In the accompanying drawings:-

Fig. 1 is a fragmental, perspective view showing a front panel portion of an auto-loading disk player according to a preferred embodiment of the invention;

Fig. 2 is a fragmental, perspective view showing the internal structure of the auto-loading disk player shown in Fig. 1;

Fig. 3 is a plan view showing the internal structure shown in Fig. 1;

Fig. 4 is a cross sectional view taken on line IV - IV in Fig. 3;

Fig. 5 is a plan view of a tray contained in the internal structure shown in Fig. 2;

Fig. 6 is a cross sectional view taken on line VI - VI in Fig. 5;

Fig. 7 is a longitudinal sectional view taken in line VII - VII in Fig. 5;

Fig. 8 is a bottom view taken on line VIII - VIII in Fig. 7;

Fig. 9 is a plan view showing a disk carrying plate as one of the members constituting the turntable contained in the internal structure shown in Fig. 2;

Fig. 10 is a longitudinal sectional view showing the disk carrying plate shown in Fig. 9;

Fig. 11 is a front view of a boss as one of the members constituting the internal structure shown in Fig. 2, a part of the boss being illustrated in sectional form;

Fig. 12 is a bottom view showing the boss shown in Fig. 11;

Fig. 13 is a longitudinal sectional view showing the table bearing contained in the internal structure shown in Fig. 2;

Fig. 14 is a bottom view of the table bearing shown in Fig. 13;

Fig. 15 is a partial sectional view taken on line XV - XV in Fig. 14;

Fig. 16 is a plan view showing a lock plate contained in the internal structure shown in Fig. 2;

Fig. 17 is a front view showing the lock plate shown in Fig. 16;

Fig. 18 is a bottom view showing a lock plate shown in Figs. 16 and 17;

Fig. 19 is a plan view showing one of the engaging protrusions of a lock plate shown in Figs. 16 to 18;

Fig. 20 is a cross sectional view taken on line xx - XX in Fig. 19;

Fig. 21 is a fragmental perspective view showing a chassis, a motor, and a detect switch, which are contained in the internal structure shown in Fig. 2;

Fig. 22 is a side view taken on line XXII - XXII in Fig. 4;

Fig. 23 is a sectional view taken on line XXIII - XXIII in Fig. 22;

Fig. 24 is a perspective view showing a pair of movable cams contained in the internal structure shown in Fig. 2;

Fig. 25 is a longitudinal sectional view showing a synchronizing lever contained in the internal structure shown in Fig. 2;

Fig. 26 is a bottom view showing the synchronizing lever shown in Fig. 25;

Fig. 27 is a perspective view of a compound gear contained in the internal structure shown in Fig. 2;

Fig. 28 is a perspective view showing a rack formed on the tray shown in Figs. 5 to 8, the rack being in mesh with the compound gear shown in Fig. 27;

Fig. 29 is a drawing for obtaining, through a construction, a pitch line of an arcuate relay gear of the compound gear shown in Fig. 27 and a curved part of the rack shown in Fig. 28;

Fig. 30 is a drawing for obtaining, through a calculation, the pitch line of the curved part of the rack shown in Fig. 28;

Fig. 31 is a block diagram showing a control system for controlling the operation of the auto-loading disk player shown in Figs. 1 through 30;

Fig. 32 is an explanatory diagram showing a key portion of the auto-loading disk player shown in Figs. 1 through 30;

Fig. 33 is another explanatory diagram showing a key portion of the auto-loading disk player shown in Figs. 1 through 30;

Fig. 34 is yet another explanatory diagram showing a key portion of the auto-loading disk player shown in Figs. 1 through 30; and

Fig. 35 is a side view showing the internal structure of a conventional auto-loading disk player.

An auto-loading disk player according to a preferred embodiment of the present invention will be described with reference to the accompanying drawings.

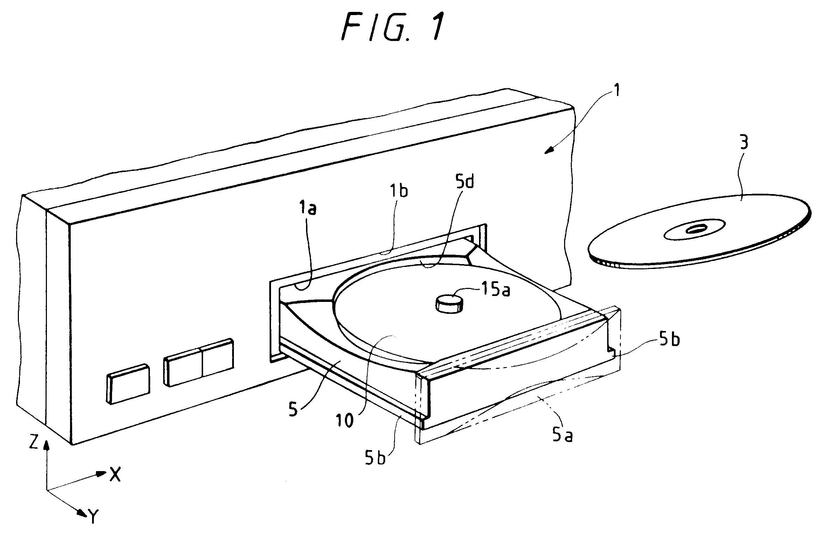

As shown in Fig. 1, a rectangular opening 1a horizontally extended is formed in the front panel of a player housing 1. Through the opening 1a, a disk 3 as a record medium is transported into a player within the player housing. In the figure, an arrow X indicates the left direction (as viewed from the player housing), and arrows Y and Z indicate respectively the direction toward the front side of the player housing, and the upward direction.

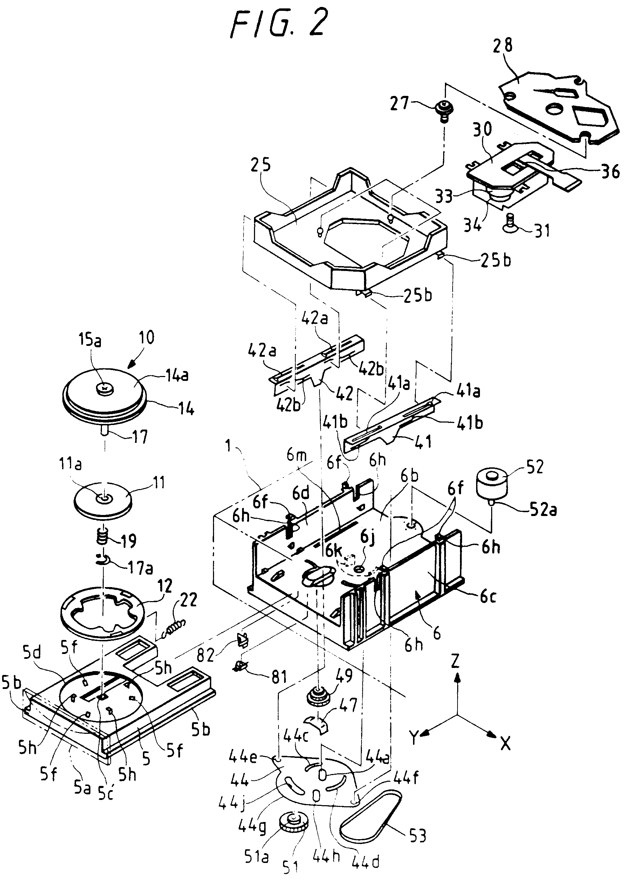

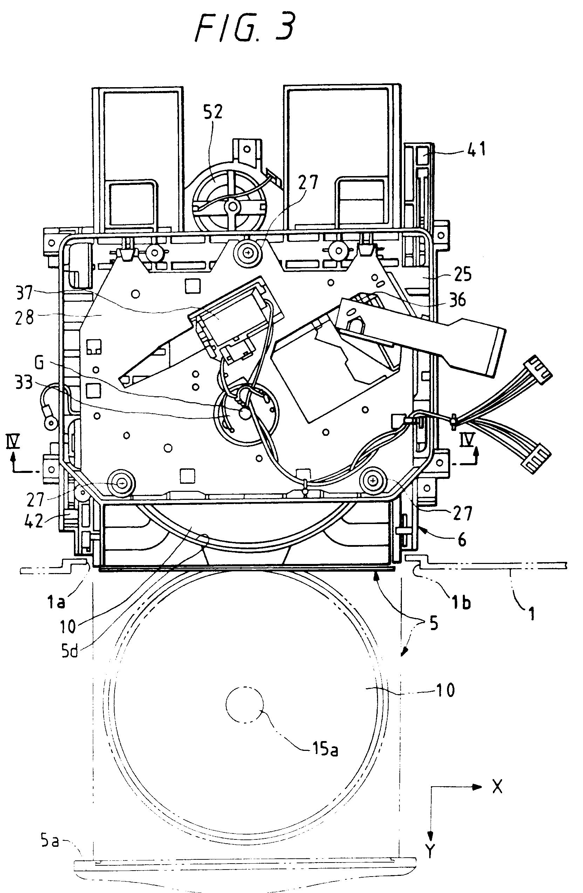

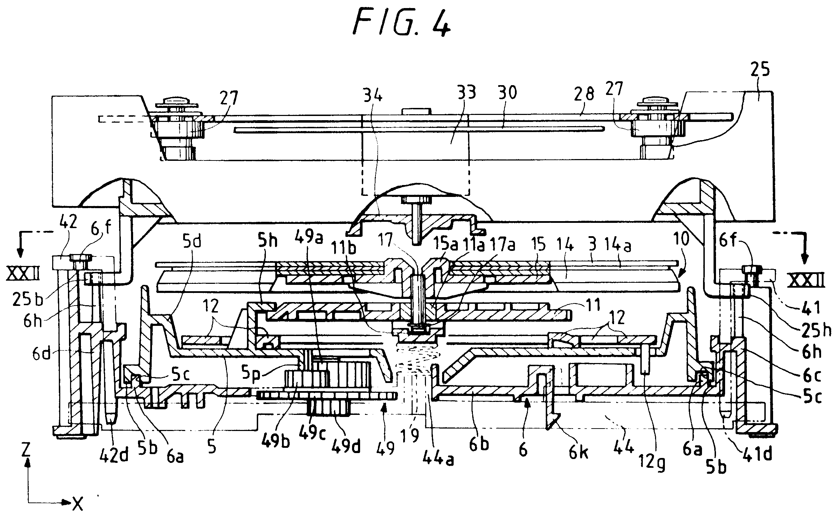

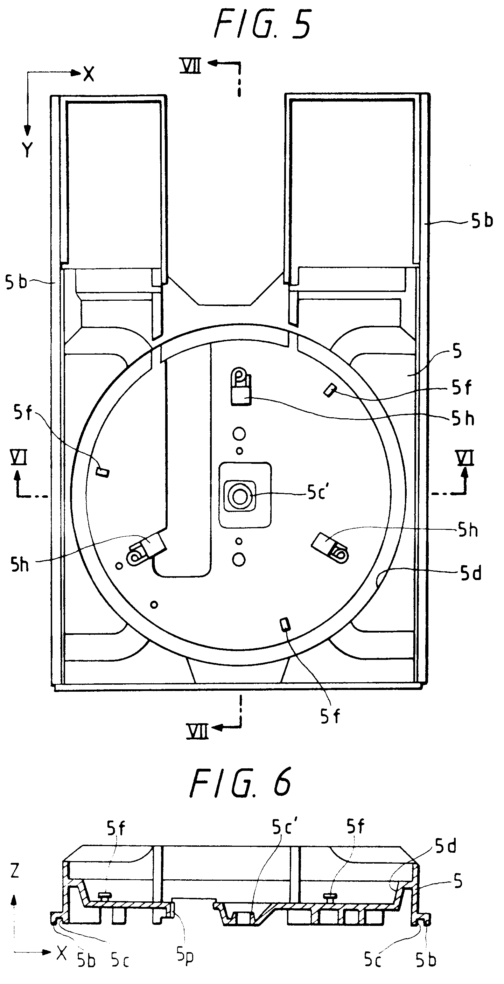

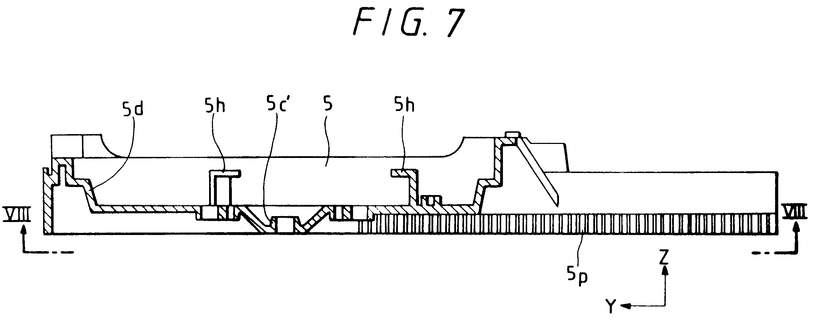

As also shown in Figs. 2 and 3, a tray 5 in the form of a movable carrying member, which is movable back and forth (the direction Y and its opposite direction), is moved between an ejected position or the disk set/removal position outside the player housing 1 and an in-housing position or the playing position within the player housing, through the entrance opening 1a. A style plate 5a for completely closing the opening 1a is provided on the front side of the tray 5. As shown in Figs. 1 and 3, the peripheral edge of the opening 1a of the front panel is cut to form a recessed or sunk part 1b. When the tray is inserted into the player housing, the style plate 5a is fitted into the recessed part 1b. The tray 5 is slidably mounted on a chassis 6, which serves as a base member, fixedly mounted within the player housing 1. The tray 5, which takes the shape of a thin parallelepiped, has rims 5b extending along both sides. Guide grooves 5c, as shown in Fig. 4, are formed in the lower surfaces of the rims 5b, respectively. When the player housing slides on and along the chassis 6, guide rails 6a formed on the chassis 6 are fitted in the guide grooves 5c and guided by the grooves. The details of the tray 5 are illustrated in Figs. 5 through 8. The shape and construction of the rims 5b and the guide grooves 5c will be best seen from Figs. 5, 6, and 8.

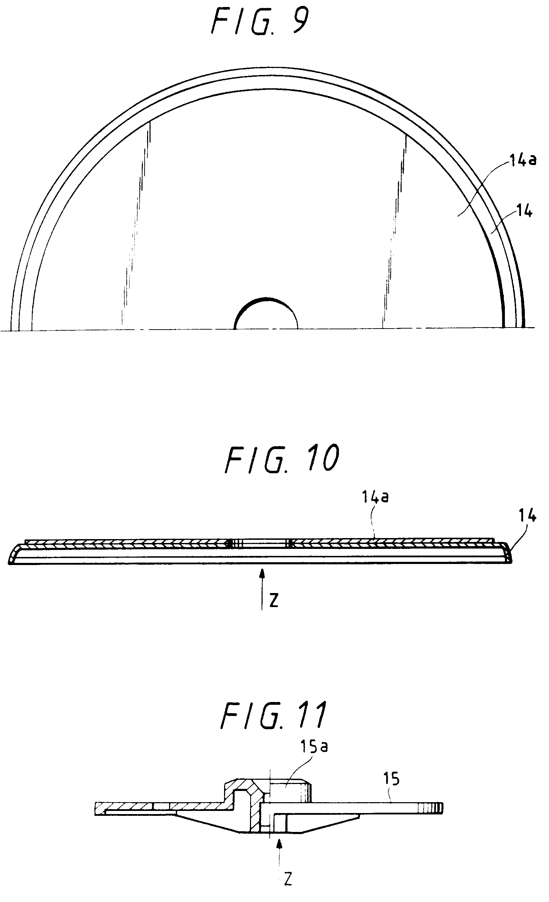

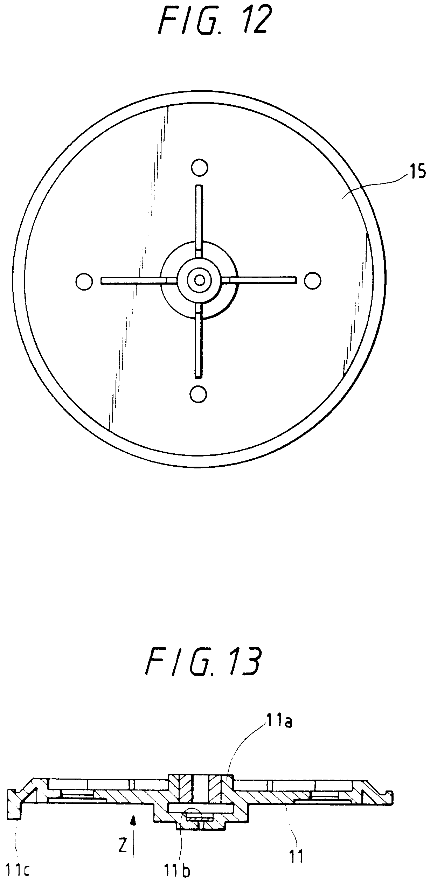

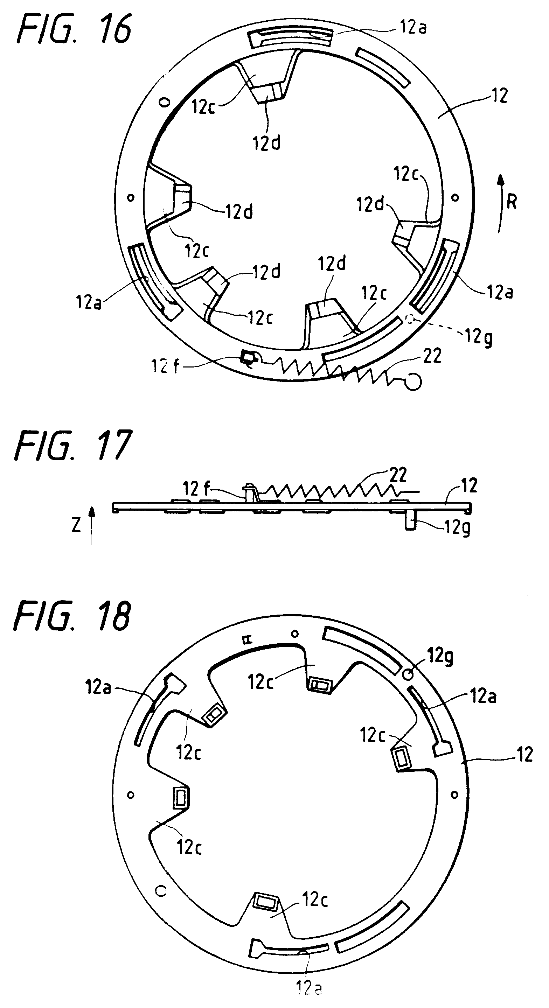

A circular recessed or sunk portion 5d is formed in the upper side of the front half part of the tray 5. A turntable 10, a table bearing 11 shaped like a disk, and a local plate 12 or an annular fastening means are coaxially superposed vertically (in the direction of an arrow Z and its opposite direction). The details of the turntable 10 are illustrated in Figs. 9 through 12; the details of the table bearing 11 are shown in Figs. 13 through 15; and the details of the lock plate 12 are illustrated in Figs. 16 through 20.

As seen from Fig. 4, the turntable 10 is constructed such that a disk carrying plate 14 for carrying the disk 3 and a boss 15 with a positioning protrusion 15a, which is fitted into the center hole of the disk 3, are coaxially coupled with each other. The turntable 10 cooperates with a pressure member to be described later to nip or clamp the disk 3, and to turn or rotate the disk 3. Figs. 9 and 10 are a plan view and a longitudinal view showing the disk carrying plate 14. Figs. 11 and 12 are respectively a front view, partially broken, and a bottom view showing the boss 15. As seen from Figs. 4, 9 and 10, a disk carrying surface of the disk carrying plate 14 is coated with a thin film table cloth 14a made of rubber, for example.

As shown in Figs. 2 and 4, a spindle 17 is fitted into the boss 15 as one of the parts constituting the turntable 10. The spindle 17 is rotatably supported by the table bearing 11. As shown in Figs. 2, 4 and 13, the table bearing 11 is provided with a radial bearing 11a and a thrust bearing 11b. The spindle 17 is supported by the bearings 11a and 11b. An E ring 17a, which is fitted around the bottom end portion of the spindle 17, prevents the spindle from slipping off the table bearing 11.

As shown in Figs. 2 and 4, the table bearing 11, which pivotally supports the turntable 10, is supported by the tray 5 through a single coiled spring 19 as a second vibration absorbing means. The coiled spring 19 is positioned in such a manner that the bottom end of the coiled spring 19 is fitted around a protrusion 5c' standing upright on the tray 5. Thus, the turntable 10 is mounted on the tray 5 by means of only one coiled spring 19, or the resilient member. With the above structure, the turntable 10 flexibly follows the rotation of the pressure member to be described later, thereby creating no eccentric rotation of the rotor shaft of the disk.

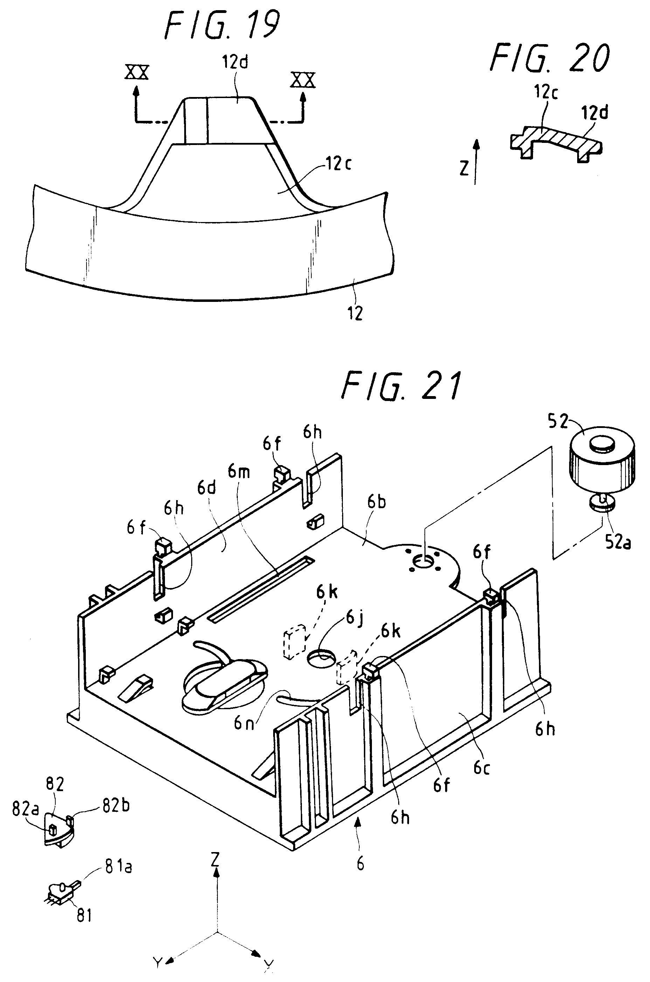

The lock plate 12 serving as an annular fastening means, disposed under the turntable 10 and the table bearing 11, fastens to the tray 5, the table bearing 11 and the turntable 10 pivotally supported by the table bearing 11, and removes the fastened state of those components. The lock plate 12 is rotatably installed on the bottom portion of the circular recessed portion 5d of the tray 5. To be more specific, as shown in Figs. 16 and 18, three arcuate elongated holes 12a are equidistantly formed in the circumferential portion of the lock plate 12. These elongated holes 12a slidably receive three T-shaped protrusions 5f protruded from the bottom surface of the circular recessed portion 5d, as seen from Figs. 2, 5 and 6. As seen from Figs. 16 and 18, the lock plate 12 is shaped like a ring. Five engaging protrusions 12c, for example, are protruded from the inner periphery of the ring toward the center. An enlarged view of one of the engaging protrusions 12c is shown in Fig. 19. Fig. 20 is a sectional view taken on line XX - XX in Fig. 19. As seen from Figs. 20 and 16, the fore end surface of the engaging protrusion 12c is tapered to form a tapered surface 12d.

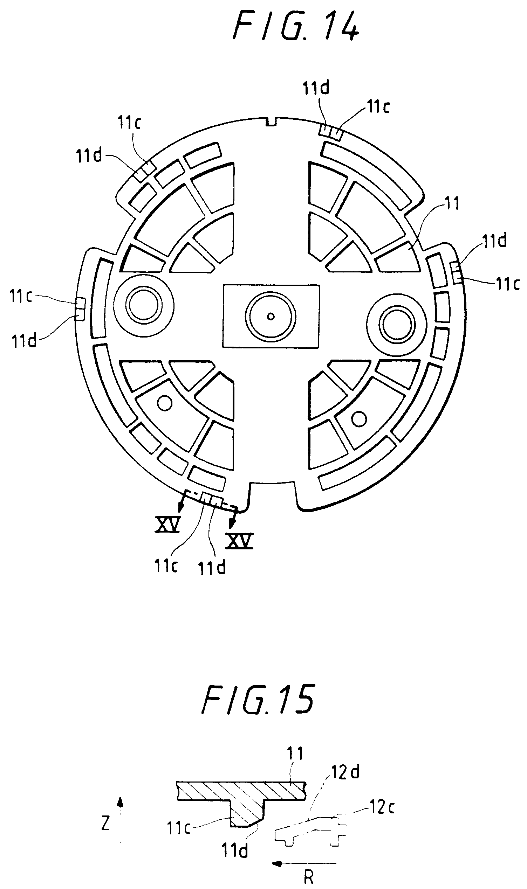

As shown in Figs. 13 and 14, engaging pieces 11c are protruded downwardly from the circumferential edge of the table bearing 11, which is to be locked by the lock plate 12. Engaging pieces 11c are provided corresponding in number and locations to the five engaging protrusions 12c. As shown in Fig. 14 and Fig. 15, showing a sectional view taken on line XV - XV in Fig. 14, the top end of each engaging piece 11c also has a tapered face 11d. As seen from Figs. 15 and 16, when the lock plate 12 is turned counterclockwise (the direction R) as viewed from the top of the lock plate, the engaging protrusions 12c of the lock plate 12 are brought, at the tapered surfaces 12d, into contact with the tapered faces 11d of the engaging pieces 11c of the table bearing 11. When the lock plate 12 is turned clockwise (in the direction opposite to the direction R), the engaging protrusions 12c disengage from the engaging pieces 11c. As seen from Fig. 15, the tapered surfaces 12d of the engaging protrusions 12c, and the tapered faces 11d of the engaging pieces 11c are both tapered downward (opposite to the direction of an arrow Z) as viewed in the direction R. As recalled, the table bearing 11 is supported by the coiled spring 19 as if it is floating above the tray 5. Therefore, if the tapered surfaces 12d of the engaging protrusions 12c engage and push the tapered faces 11d, the table bearing 11 is pushed upward (in the direction of the arrow Z) owing to the wedge action. As shown in Figs. 2, 4, 5 and 7, three L-shaped receiving pieces 5h are equidistantly formed on the tray 5 so that they receive at their upper or horizontal arms the upper surface of the table bearing 11 that is pushed upward. Thus, the table bearing 11 is fastened in a state wherein it is nipped between the receiving pieces 5h and the engaging protrusions 12c of the lock plate 12. When the engaging protrusions 12c do not engage the engaging pieces 11c, that is, the table bearing 11 is not pushed upward, the receiving pieces 5h are spaced from the table bearing, and hence are not in contact with it.

As shown in Figs. 16 and 17, one projecting piece 12f is formed on the upper side of the circumferential portion of the lock plate 12, and coupled with one end of a coiled spring 22. This spring is illustrated also in Fig. 2. The coiled spring 22, which is coupled at the other end with a predetermined location of the tray 5, urges the lock plate 12 to turn in the direction of the arrow R, i.e., counterclockwise, in Fig. 16. That is, the lock plate 12 is constantly urged, by the coiled spring 22, in such a direction as to cause the tapered surfaces 12d of the engaging protrusions 12c to engage the tapered faces 11d of the engaging pieces 11c of the table bearing 11.

As shown in Figs. 4 and 16 through 18, one pin 12g is planted at a predetermined location on the lower side of the circumferential portion of the lock plate 12. The pin 12g will engage a projecting piece (not shown) projected from a predetermined location on the chassis 6, when the tray 5 is moved into the player housing 1. As the tray 5 moves into the player housing, the projecting piece turns the lock plate 12 clockwise (in the direction reverse to the arrow R) in Fig. 16, while resisting the force that is applied to the lock plate by the coiled spring 19. Progression of the turn of the lock plate disengages the engaging protrusions 12c of the lock plate 12 from the engaging pieces 11c of the table bearing 11. The table bearing 11 and the turntable 10 are placed in a state such that they disengage from the tray 5.

The coiled spring 19, the pin 12g of the lock plate 12, and the projecting piece (not shown) formed on the chassis 6 cooperate to form an annular fastening rotating means, which rotates the lock plate 12 serving as the annular fastening means in the forward and reverse directions as the tray 5 is moved into and out of the player housing 1. The annular fastening rotating means, the lock plate 12, the engaging pieces 11c of the table bearing 11 to engage the engaging protrusions 12c of the lock plate 12, the receiving pieces 5h upstanding on the tray 5 cooperate to make up a fastening means, which fastens the turntable 10 to the tray and removes its fastened state in synchronism with the inserting operation and the ejecting operation of the tray 5 to and from the player housing 1.

As described above, when the turntable 10 is ejected from and placed outside the player housing 1, it is fastened to the tray 5 by the fastening means. Therefore, it is rigidly supported to stably hold the disk thereon.

As shown in Figs. 2 through 4, a movable base 25 shaped like a rectangular plate is disposed above the chassis 6. A mechanical chassis 28 like a planar plate is mounted above the movable base 25 in a manner such that first vibration absorbing means made of three floatable rubber pieces 27 serving as resilient members intervene therebetween. As shown in Figs. 2 and 4, a carrying plate 30 is fixed to the lower side of the mechanical chassis 28 by means of a plurality of screws 31. A motor 33 is mounted on the carrying plate 30 so that it faces downward. A pressure member 34 shaped like a disk is fastened to the output shaft of the motor. The pressure member 34 comes in contact with the disk 3 to be played and pushes the disk against the turntable 10. As shown in Figs. 2 and 3, an optical pickup 36, mounted on the carrying plate 30, is movable along the record surface of the disk 3. A pickup drive means, including the motor 37, for driving the optical pickup 36 for its movement is further mounted on the carrying plate.

The mechanical chassis 28, the carrying plate 30, the motor 33, the pressure member 34, the optical pickup 36, and the pickup drive means including the motor 37 cooperate to form a playing means for playing the disk 3.

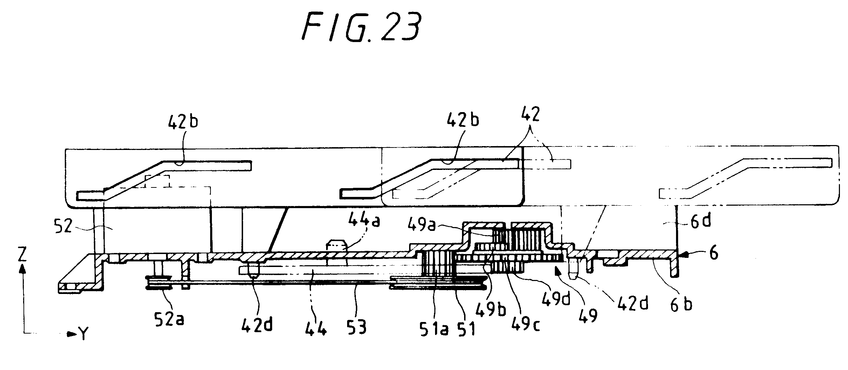

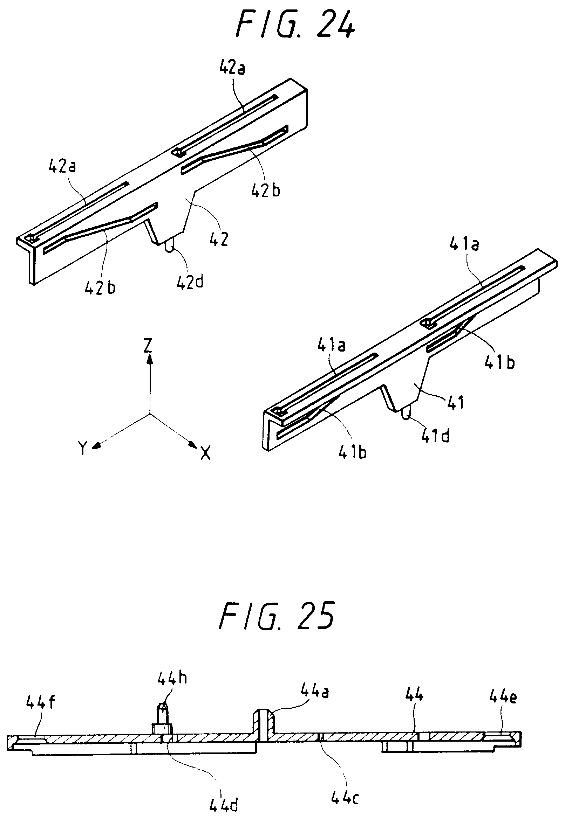

Fig. 21 is a fragmental, perspective view showing in an enlarged manner the movable base 25 shown in Fig. 2. In Figs. 2 and 21, Fig. 4, and Figs. 22 and 23, the chassis 6, which is disposed under the movable base 25 carrying the playing means, is provided with a bottom 6b, and a pair of opposed upstanding walls 6c and 6d, which stand erect at both sides of the bottom. Longitudinally movable cams 41 and 42, which are movable back and forth (in the direction of the arrow Y and its opposite direction), are coupled with the upstanding walls 6c and 6d of the chassis. More particularly, as seen from Fig. 24, guide groove pairs 41a and 42a are respectively formed in the upper portions of the movable cams 41 and 42. The guide groove pairs 41a and 42a slidably receive T-shaped projection pieces 6f formed on the top end faces of the upstanding walls 6c and 6d of the chassis (see Figs. 2, 4, 21 and 22).

As shown in Figs. 2 and 4, pairs of pins 25b, four pins in total, are respectively protruded from the right and left lower ends of the movable base 25. These pins 25b are slidably inserted into guide grooves 6h, which are vertically elongated in the upstanding walls 6c and 6d of the chassis 6. With these pin and groove combinations, the movable base 25 is vertically guided by the chassis 6.

The pins 25b protruded from the movable base 25 are also slidably inserted into cam holes 41b and 42b formed respectively in the cams 41 and 42. As best seen from Fig. 24, the cam hole 41b formed in the cam 41 located on the left side, as a whole, is slanted downwardly (in the direction opposite to the arrow Z direction) toward the front side (arrow Y direction). The cam hole 42b formed in the cam 42 located on the right side, as a whole, is slanted upwardly toward the front side. Accordingly, as the cams 41 and 42 reciprocatively move back and forth, the movable base 25 reciprocatively moves in the vertical direction.

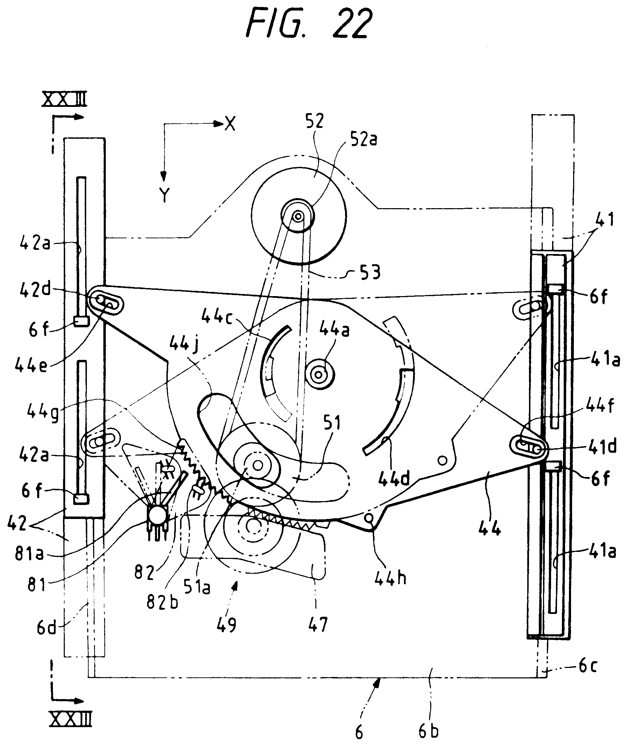

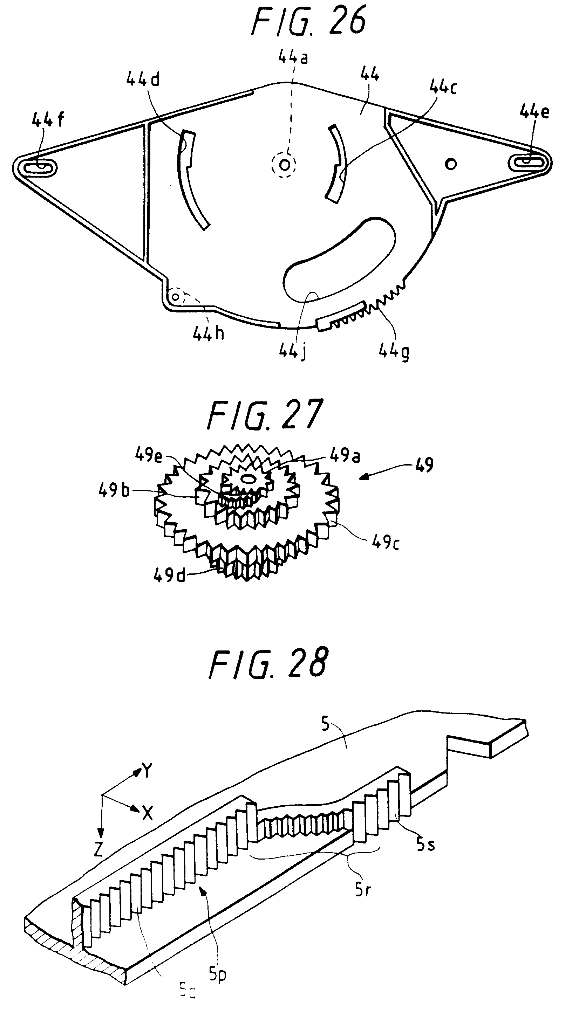

As seen in Figs. 2, 4, and 22, a synchronizing lever 44 is provided between the cams 41 and 42 on the lower surface of the chassis 6. The synchronizing lever 44 is rotatably mounted in a circular hole 6j formed in the bottom 6b of the chassis 6 by means of a pin 44a erected substantially at the center of the lever. The details of the synchronizing lever 44 are illustrated in Figs. 25 and 26. As shown in Figs. 2, 4, and 21, on the bottom 6b of the chassis 6, two pawls 6k are disposed on both sides of the circular hole 6j, while being downwardly protruded therefrom. The pawls are slidably inserted into guide slits 44c and 44d, which are formed in the synchronizing lever 44 on both sides of the pin 44a. The combination of the pawls and the slits allows the synchronizing lever 44 to swing. As seen from Figs. 22, 25 and 26, elongated holes 44e and 44f are formed in both ends of the synchronizing lever 44. Pins 41d and 42d protruded from the lower ends of the cams 41 and 42 are inserted into those elongated holes, respectively. Since the cams 41 and 42, and the synchronizing lever 44 are disposed nipping the bottom 6b of the chassis 6, the pins 41d and 42d of the cams 41 and 42 are protruded below the lower surface of the chassis 6, through narrow openings 6m formed in the bottom (Figs. 2 and 21). The protruded parts of the pins 41d and 42d are inserted into the elongated holes 44e and 44f of the synchronizing lever 44, respectively.

As described above, the cams 41 and 42 are coupled by means of the synchronizing lever 44. Accordingly, both the cams are synchronously moved in a reciprocative manner.

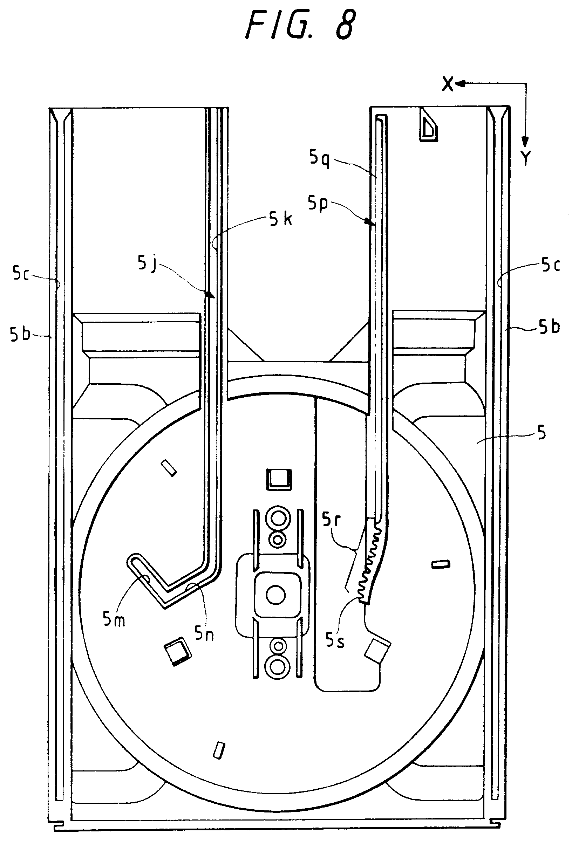

As shown in Figs. 2 and 22, and Figs. 25 and 26, an arcuate gear 44g is formed in a predetermined location of the free end of the synchronizing lever 44. A single pin 44h stands upright at a predetermined location on the upper surface of the synchronizing lever 44. The pin 44h is slidably coupled with a cam groove 5j formed on the lower surface of the tray 5, as shown in Fig. 8. As seen from the figure, the cam groove 5j consists of a long linear part 5k extending from the rear end of the tray 5 toward the fore side, a short linear part 5n extending from the fore end of the linear part 5k toward the fore and left side, and a short linear part 5m extending from the fore end of the short linear part 5n toward the left side. Since the tray 5 and the synchronizing lever 44 are disposed sandwiching the bottom 6b of the chassis 6, the pin 44h is protruded toward the upper side of the chassis 6 through an arcuate slit 6n (see Fig. 21) formed in the bottom 6b. The protruded part of the pin is inserted into the cam groove 5j.

The arcuate gear 44g, together with the pin 44h, which is formed on the synchronizing lever 44, may be in mesh with a compound gear 49, which is rotatably supported by a receiving plate 47 fastened to the chassis 6 by means of screws, for example (Figs. 2 and 22). As seen from Fig. 27, the compound gear 49 consists of first to fourth circular gears 49a to 49d of the different diameters which are coupled with one another coaxially in the circumferential side faces as viewed in the direction of the axis of rotation. The lowermost circular gear 49d is in mesh with the arcuate gear 44g of the synchronizing lever 44.

As shown in Figs. 2, 22 and 23, a pulley 51, located on the fore side of the gear 49, is mounted on the lower surface of the chassis 6. As also shown in Figs. 3 and 21, a motor 52, facing downward, is mounted on the rear end portion of the chassis 6. A small pulley 52a is secured to the output shaft of the motor. A belt 53 is wound around the small pulley 52a and the pulley 51. A circular gear 51a is integrally formed on the upper surface of the pulley 51. The third circular gear 49c as counted from the top, which is contained in the compound gear 49, is in mesh with the circular gear 51a. As seen from Figs. 2, 22 and 26, an arcuate opening 44j is formed in the synchronizing lever 44. The circular gear 51a is inserted through the arcuate opening 44j.

The motor 52, the pulley 51 including the circular gear 51a, the small pulley 52a, and the belt 53 make up a torque applying means for applying a torque to the compound gear 49.

Of the four circular gears 49a to 49d of the compound gear 49, the top or first and the second gears 49a and 49b are in mesh with a rack 5p, which is formed in the tray 5 and extends in its moving direction. The rack 5p is illustrated in Fig. 28 in a state wherein the bottom face of the tray 5 is directed upward. As best illustrated in Figs. 28 and 8, the rack 5p formed on the tray 5 includes a long linear part 5q extending from the rear end of the tray 5 toward the fore side, a curved part 5r extending from the fore end of the linear part 5q, and a short linear part 5s extending from the fore end of the curved part 5r in the same direction as that of the linear part 5q. The long linear part 5q meshes with the large diameter, second circular gear 49b as counted from the top of the compound gear 49. The short linear part 5s also meshes with the small diameter, top circular gear 49a. The curved part 5r, located between both the linear parts 5q and 5s, is in mesh with an arcuate relay gear 49e formed so as to connect the gears 49a and 49b, as best seen from Fig. 27. The circular gears 49a and 49b, and the arcuate relay gear 49e, and the rack 5p to be in mesh with those gears will be described in detail later.

The compound gear 49, the rack 5p formed in the tray 5 to be in mesh with the former, and the torque applying means (already stated) for applying a torque to the compound gear 49 cooperate to form a drive means for reciprocatively moving the tray 5 back and forth. The drive means, the tray 5, and the chassis 6 as the base for guiding the tray cooperate to form a record medium transfer unit for transporting the disk 3 as a record medium to a playing position.

Means for moving the playing means including the pressure member 34, toward and apart from the turntable 10 on the tray 5 is made up of the compound gear 49, the torque applying means for applying a torque to the compound gear 49, the cams 41 and 42, the synchronizing lever 44, the guide grooves 6h formed in the chassis 6 in order to vertically guide the movable base 25, and small members related to those.

The description to follow is directed to the assembly of the playing means, and the first vibration absorbing means (stated above) formed with the floatable rubber pieces 27 as the three resilient members for supporting the playing means in a state wherein it floats from the player housing 1.

As shown in Figs. 2 and 3, the three floatable rubber pieces are disposed equidistantly from the axis of rotation of the motor 33 or pressure member 34 in the plane, which is orthogonal to the axis of rotation. The gravity center G of the playing means (shown in Fig. 3) lies at the axis of rotation. With such a construction, when the disk is rotating, the pressure member 34 will not rotate eccentrically, the disk rotates while keeping its plane exactly horizontal, and consequently the disk can be played under desirable conditions.

The two circular gears 49a and 49b of the compound gear 49, the arcuate relay gear 49e provided connecting those circular gears, and the rack 5p to be in mesh with those gears will be described in detail.

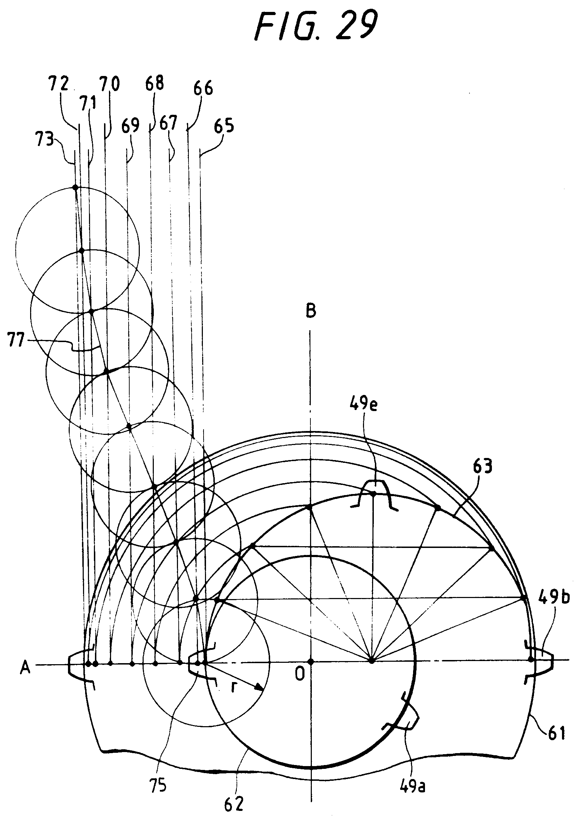

As shown in Fig. 29, a pitch circle of the arcuate relay gear 49e of the compound gear 49 is a circle 63 which is inscribed within a pitch circle 61 of the large diameter, circular gear 49b, and is circumscribed outside the small diameter, circular gear 49a.

A pitch line of the curved part 5r of the rack 5p to be in mesh with the arcuate relay gear 49e is obtained through the following construction.

In Fig. 29, a circle passing through a pitch point of each tooth of the arcuate relay gear 49e is drawn. The center of the circle is the center O of rotation of the circular gears 49a and 49b. The number of the circles drawn is equal to that of the teeth of the arcuate relay gear 49e. Straight lines are drawn, each passing through the intersection point of each circle and an axis A, and being orthogonal to the axis A. Those straight lines are denoted as reference numerals 65 to 73 in Fig. 29. A circle of the radius "r" is then drawn of which the center is the pitch point of the common tooth 75 of the arcuate relay gear 49e and the small diameter, circular gear 49a. An intersection point of the circle thus drawn and the straight line 66 is obtained. Another circle of the radius "r" is drawn of which the center is the intersection point, and an intersection point of the circle and the straight line 67 is obtained. Similarly, circles are additionally drawn for the remaining straight lines 68 through 73, and the intersection points are obtained. A pitch line 77 of the curved part 5r of the rack 5p is formed by connecting the thus obtained intersection points by a smooth curve.

The pitch line of the curved part 5r, which is thus obtained through construction, may also be obtained in the following calculating method.

Fig. 30 is a diagram showing a state wherein the arcuate relay gear 49e is in mesh with the curved part 5r. In the figure, R denotes the diameter of the pitch circle of the arcuate relay gear 49e. The center of the pitch circle and the center O of rotation of the compound gear 49 are related as shown. Letters "a", "b", "c", "d", "e", $\alpha$, and $\theta$ are defined as below. The following two formulas are set up. If numerical values are successively substituted into $\theta$, the pitch line 77 of the curved part 5r can be obtained.

a: Locus of the center of rotation of the compound gear 49;

b: Line passing through the center of the arcuate relay gear 49e and orthogonal to the locus "a";

c: Center of the arcuate relay gear 49e;

d: Point of contact of the pitch circle 63 of the arcuate relay gear 49e and the pitch line 77 of the curved part 5r;

e: Distance between the center "c" and the center O of the compound gear 49;

$\theta$: Angle between the line connecting the center O and the center "c", and the line "b";

$\alpha$: Angle between the line connecting the contact point "d" and the center "c", and the line "b"; and

$$e \sin\theta = R \sin\alpha,$$

Rearranging the formula, we have $\alpha = \sin^{-1}(e \sin\theta/R)$, and

$$y = R \cos\alpha - e \cos\theta.$$

In the above simultaneous equations, numerical values are successively substituted into $\theta$, and then we have the locus.

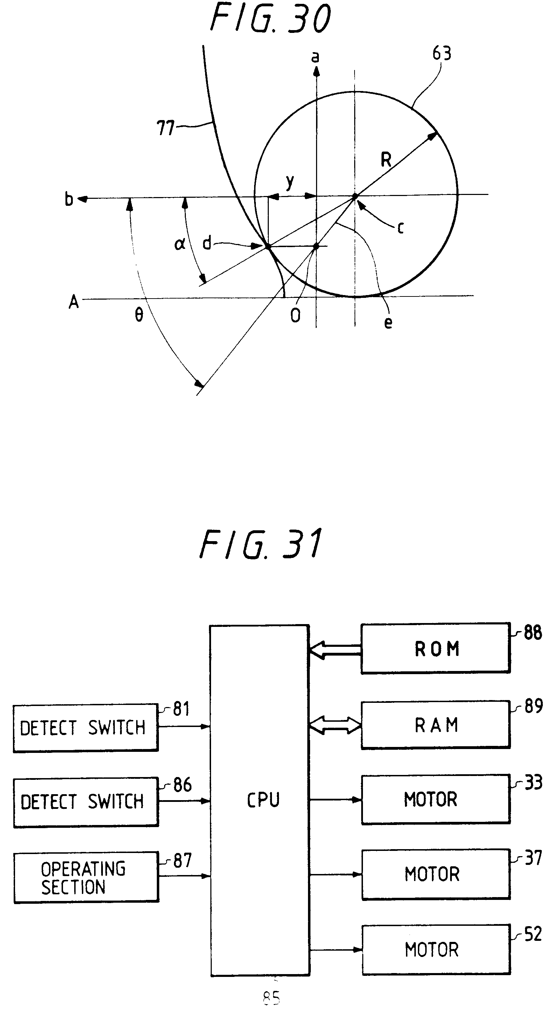

As shown in Figs. 2, 21 and 22, a detect switch 81 and an intermediate lever 82 are mounted on a predetermined location of the lower surface of the chassis 6. The detect switch 81 is provided with an operating piece 81a. The intermediate lever 82 is provided with a pin 82a (Fig. 21), and may be swung about the pin. A protruded piece 82b is formed at the free end of the lever. When the lever is swung, the protruded piece 82b of the free end of the lever comes in contact with the operating piece 81a to operate the detect switch. As shown, the swing part of the intermediate lever 82 is shaped like a triangle. As shown in Fig. 22, the synchronizing lever 44 comes in contact with the swing part, to turn it counterclockwise and operate the detect switch 81. The detect switch 81 and the intermediate lever 82 are provided for judging whether or not the tray 5 has been inserted in the player housing 1 and whether or not the disk has been clamped. As shown in Fig. 31, a detect signal generated by the detect switch 81 is sent to a CPU 85 or a controller, which is for controlling the operation of the disk player. As shown in Fig. 31, the CPU 85 also receives a detect signal generated by a detect switch 86 installed at another location. Under control of a control program prestored in a ROM 88, the CPU 85 cooperates with a RAM 89 to control the motors 33, 37, and 52 according to the signals derived from the respective detect switches and a group of switches in an operating section 87 (Fig. 31) on the front panel.

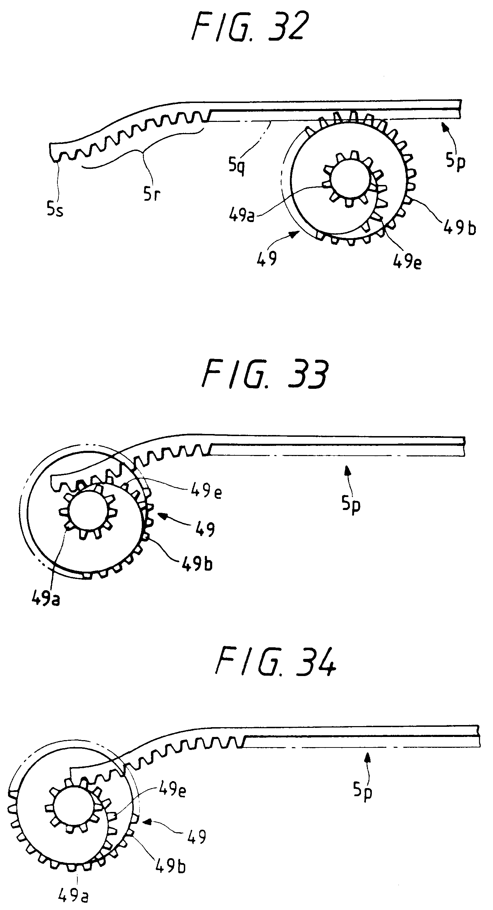

The operation of the auto-loading disk player thus constructed will be described with reference to the accompanying drawings including additionally Figs. 32 to 34. Description of the operation will start from a state wherein the tray 5 is ejected from and placed outside the player housing 1 as shown in Figs. 1 and 3.

In the ejected state of the tray 5 outside the player housing 1 as shown in Fig. 1, a disk 3 to be played is placed on the turntable 10, which is located on the tray. At this time, the turntable 10 is fastened to the tray 5 since the lock plate 12 locks the table bearing 11 with the aid of the coiled spring 22, as noted above. Therefore, the turntable 10 is immovable when the disk is set or is loaded (the loading of the disk will be described later).

After the disk 3 is placed on the turntable 10, an operator operates the operating section on the front panel, so that a loading start command is issued to cause the machine to start the loading operation.

In response to the loading start command generated, the motor 52 is forwardly rotated. In turn, the compound gear 49 also forwardly rotates, and the tray 5 with the rack 5p, which is in mesh with the compound gear 49, starts to move backward (in the direction opposite to the arrow Z direction), i.e., toward the playing position. As shown in Fig. 32, during a period from an initial stage of the tray accommodating operation to the stage near the end of the operation, the large diameter, second circular gear 48b of the compound gear 49 is in mesh with the long linear part 5q of the rack 5p. Therefore, the tray 5 moves relatively fast. When the inserting operation approaches to the end, the arcuate relay gear 49e continuous to the circular gear 49b, and the small diameter, circular gear 49a are successively brought to be in mesh with the curved part 5r of the rack 5p and the short linear part 5s. Therefore, the tray 5 is gradually decelerated.

Until the inserting operation of the tray 5 comes to the end, the linear part 5k of the cam groove 5j formed in the lower surface of the tray 5 is in slidable contact with the pin 44h on the synchronizing lever 44. When the inserting operation comes near the end, the slant, short linear part 5n continuous to the linear part 5k comes in slidable contact with the pin 44h. In turn, the synchronizing lever 44 is turned by a slight angle counterclockwise in Fig. 22, so that the arcuate gear 44g of the synchronizing lever 44 comes in mesh with the lowermost circular gear 49d (Fig. 27) of the compound gear 49. In response to the engagement of the gear teeth, the compound gear 49, which rotates to execute the final stage of the inserting operation of the tray 5, greatly turns the synchronizing lever 44 clockwise in Fig. 22, so that the lever turns from a position as indicated by a continuous line to another position as indicated by a two-dot chain line. As a result, the cams 41 and 42 pivotally mounted at both sides of the synchronizing lever 44 are respectively moved back and forth. With the relative motions of the cams 41 and 42, the movable base 25, which slidably contacts with the cam holes 41b and 42b, starts to descend.

In this way, the inserting operation of the tray 5, and the descending operation of the movable base 25 progress and those operations are near the end. Then, as shown in Fig. 22, the synchronizing lever 44 engages the swing part of the intermediate lever 82 to swing it counterclockwise. The protruded piece 82b of the intermediate lever 82 engages the operating piece 81a of the detect switch 81 to operate the switch. The detect switch 81 generates a detect signal for transmission to the CPU 85 (Fig. 31), which in turn stops the motor 52. Under this condition, the disk 3 is nipped or clamped between the turntable 10 and the pressure member 34.

As described above, when the synchronizing lever 44 swings, the pin 44h standing upright on the synchronizing lever moves from the short linear part 5n of the cam groove 5j of the tray 5 to the short linear part 5m (Fig. 8). As a result, the tray 5 is locked to the player housing 1.

Here, the auto-loading disk player is placed in a play-ready state. In this state, the lock plate 12 has been separated from the table bearing 11, while resisting the urging force by the coiled spring 22. The table bearing 11 and the turntable 10 are supported only by the coiled spring 19, and are in a floating state. The clamping force W applied to the disk 3 in the floating state is given by

$$W = W_M - \omega_1 = \omega_2 - (W_D + W_T)$$

where $W_M$ : Total weight of the mechanical chassis 28 supported by the floatable rubber pieces 27 (see Fig. 2, for example), the carrying plate 30, the motor 33 mounted on the carrying plate, the pressure member 34, and the like;

$\omega_1$ : Supporting force by the three floatable rubber pieces 27;

$\omega_2$ : Support force by the coiled spring 19;

$W_D$ : Weight of the disk 3; and

$W_T$ : Weight of the turntable 10 and the table bearing 11.

In the play-ready state, the motor 33 operates to rotate the disk 3, and the motor 37 (Fig. 3) rotates to move the optical pickup 36. Thus, the musical performance starts.

After the musical performance ends, the disk 3 is returned to the position outside the player housing 1. The disk return operation traces the reverse procedure of the disk loading operation, and hence no further description of it will be given.

In the embodiment as mentioned above, the compound gear 49 is mounted on the chassis 6 that is fixed, and the rack 5p to be meshed with the compound gear is formed on the tray 5 that is movable. If required, the rack may be formed on the fixed side and the compound gear 49 may be mounted on the tray 5 or the movable side.

As described in detail above, the auto-loading disk player of the invention includes a fastening means for fastening the turntable to the carrying member which carries the turntable through a second vibration absorbing means and for removing the fastened state of the turntable in synchronism with the ejecting operation of the carrying member from the player housing and the inserting operation of the carrying member into the player housing. When the turntable is placed at the disk set/remove position outside the player housing, the turntable is fastened to the carrying member by means of the fastening means. When the turntable has been inserted into the player housing, the turntable is released from its fastened state.

With such a construction, there is no need of using a plurality of resilient members for mounting the turntable to the carrying member. In other words, use of a single resilient member suffices for mounting the turntable to the carrying member. Therefore, the turntable more flexibly follows the rotation of the pressure member when compared with the case where it follows the rotation of the pressure member supported by a plurality of resilient members. Consequently, the rotor shaft of the disk will not rotate eccentrically when the disk is rotated.

When the turntable is ejected from and placed outside the player housing, it is fastened to the carrying member by the fastening means. Therefore, it is stably supported and held in a satisfactorily steady state.

**Claims**

1. An auto-loading disk player comprising:

a pressure member being brought into contact with a disk to be played thereby to press the disk, the pressure member being supported by and within a player housing by means of first vibration absorbing means;

a movable carrying member provided so as to be ejected from and inserted into the player housing through an opening formed in the player housing during an ejecting operation and an inserting operation, respectively;

drive means for driving the carrying member to move the carrying member;

a turntable being mounted on the carrying means by means of second vibration absorbing means, and carrying the disk thereon, the turntable cooperating with the pressure member to clamp the disk and to rotate the disk; and

means for making the pressure member and the turntable approach each other and for separating the pressure member and the turntable from one another;

further comprising a fastening means which fastens the turntable to the carrying member and releases the turntable from its fastened state in synchronism with the ejecting operation and the inserting operation of the carrying member.

2. The auto-loading disk player according to claim 1, wherein said fastening means comprises:

an annular fastening means having engaging protrusions in a circumferential edge portion, and being coaxial with the turntable and rotatably provided on a side of the carrying member, which is opposite to a side of the turntable for carrying the disk;

a table bearing pivotally supporting the turntable, and having engaging pieces to engage the engaging protrusions of the annular fastening means; and

annular rotating means for rotating the annular fastening means forwardly and reversely as the ejecting operation and the inserting operation of the carrying member progress.

3. The auto-loading disk player according to claim 1, wherein said second vibration absorbing means comprises a single coiled spring.

4. The auto-loading disk player according to claim 2, wherein said annular fastening means comprises a ring-shaped lock plate, the engaging protrusions extending from an inner periphery of the lock plate toward a center thereof.

# FIG. 1

EP 0 514 607 A1

# FIG. 2

# FIG. 3

# FIG. 4

EP 0 514 607 A1

## FIG. 5

## FIG. 6

FIG. 7

EP 0 514 607 A1

# FIG. 8

17

# FIG. 9

# FIG. 10

# FIG. 11

# FIG. 12

15

# FIG. 13

11a

11c    Z    11b    11

# F I G. 14

# F I G.15

FIG. 16

FIG. 17

FIG. 18

# FIG. 19

12d

XX

12c

12

# FIG. 20

12c

12d

Z

# FIG. 21

52

52a

6f

6h

6h

6f

6h

6d

6m

6b

6f

6k

6j

6k

6k

6n

6h

6f

6c

6h

6

82

82a

82b

81a

81

Z

Y

Y

# FIG. 22

EP 0 514 607 A1

# FIG.23

# FIG. 24

# FIG. 25

## FIG. 26

## FIG. 27

## FIG. 28

# FIG. 29

# FIG. 30

# FIG. 31

## FIG. 32

## FIG. 33

## FIG. 34

# FIG. 35  PRIOR ART

# DOCUMENTS CONSIDERED TO BE RELEVANT

EP 91311277.7

| Category | Citation of document with indication, where appropriate, of relevant passages | Relevant to claim | CLASSIFICATION OF THE APPLICATION (Int. Cl.5) |
|---|---|---|---|
| P,A | DE - A - 4 037 184 (PIONEER) <br> * Fig. 1a,22; column 1, lines 17-47 * | 1 | G 11 B 33/08 <br> G 11 B 17/02 |
| A | US - A - 4 731 779 (MATHUNAGA) <br> * Abstract; fig. 2-4 * | 1,2,4 | |
| A | PATENT ABSTRACTS OF JAPAN, unexamined applications, P field, vol. 13, no. 73, February 20, 1989 THE PATENT OFFICE JAPANESE GOVERNMENT page 81 P 830 <br> * Kokai-no. 63-257 986 (HITACHI) * | 1 | |
| A | PATENT ABSTRACTS OF JAPAN, unexamined applications, P field, vol. 12, no. 494, December 23, 1988 THE PATENT OFFICE JAPANESE GOVERNMENT page 81 P 805 <br> * Kokai-no. 63-204 581 (MATSUSHITA) * | 1 | **TECHNICAL FIELDS SEARCHED (Int. Cl.5)** <br><br> G 11 B 3/00 <br> G 11 B 17/00 <br> G 11 B 25/00 <br> G 11 B 33/00 |
| A | PATENT ABSTRACTS OF JAPAN, unexamined applications, P field, vol. 13, no. 245, June 8, 1989 THE PATENT OFFICE JAPANESE GOVERNMENT page 5 P 881 <br> * Kokai-no. 1-46 284 (NEC CORPORATION) * | 1 | |

The present search report has been drawn up for all claims

| Place of search | Date of completion of the search | Examiner |
|---|---|---|
| VIENNA | 21-08-1992 | DIMITROW |

EPO FORM 1503 03.82 (P0401)